# EUROPÄISCHE PATENTSCHRIFT

(11) **EP 0 911 247 B1**
(45) Veröffentlichungstag und Bekanntmachung des Hinweises auf die Patenterteilung: **23.07.2003**
(21) Anmeldenummer: 98118901.2
(22) Anmeldetag: 07.10.1998
(51) Int. Cl.: B62D 43/10

(54) **Reserveradbefestigung aus Kunststoff**
Plastic mounting for spare wheel
Fixation de roue de secours en plastique

(30) Priorität: 20.10.1997 DE 19746004
(43) Veröffentlichungstag der Anmeldung: 28.04.1999
(73) Patentinhaber: KKP Rapid GmbH & Co KG, 97638 Mellrichstadt (DE)
(72) Erfinder: Hölzer, Eberhard A., D-97332 Volkach (DE)
(74) Vertreter: Böck, Bernhard, Dipl.-Ing.

(56) Entgegenhaltungen:
- EP-A- 0 415 899
- WO-A-97/32771

## Beschreibung

Die vorliegende Erfindung betrifft eine Befestigungsvorrichtung zur lösbaren Befestigung eines Reserverads an einer Reserveradaufnahme, beispielsweise in der Reserveradmulde in einem Kraftfahrzeug oder an einer Reserveradaufnahme im Außenbereich der Karosserie. Ob es sich bei dem Reserverad um ein vollwertiges Reserverad oder um ein sogenanntes Notrad handelt, ist erfindungsgemäß ohne Bedeutung.

Befestigungsvorrichtungen der eingangs genannten Art weisen einen Gewindeschaft auf, der mittels eines Sockels, der an der Karosserie fixiert ist, an der Reserveradaufnahme des Kraftfahrzeugs befestigt werden kann. Nach Anordnung des Reserverades an der Reserveradaufnahme, wird eine Ausnehmung in der Reserveradfelge von dem Gewindeschaft durchgriffen und anschließend kann das Reserverad durch Zustellen eines Klemmelements auf dem Gewindeschaft, beispielsweise durch Aufschrauben einer Flügelmutter, an der Reserveradaufnahme befestigt werden.

Bei den aus dem Stand der Technik bekannten Befestigungsvorrichtungen werden Gewindestagen aus Stahl verwendet, auf die eine Flügelmutter aus Metall aufgeschraubt wird. Da derartige Flügelmuttern nur eine relativ kleine Klemmfläche aufweisen, wird zur Übertragung der Klemmkräfte eine Beilagscheibe zwischen Flügelmutter und Felge eingelegt.

Nachteilig bei derartigen Befestigungsvorrichtungen ist es, daß die metallischen Oberflächen von Gewindestange und Klemmutter leicht korrodieren, weshalb ein Öffnen der Befestigungsvorrichtung zur Entnahme des Reserverades infolge der höheren Gewindereibung stark erschwert oder sogar unmöglich gemacht ist. Dies gilt um so mehr, da die verwendeten Gewindestangen einen relativ kleinen Durchmesser aufweisen, weshalb zur Erreichung ausreichender Klemmkräfte ein relativ großes Anzugsmoment aufgebracht werden muß. Außerdem weisen die teilweise verwendeten Flügelmuttern nur sehr kleine Greifflächen auf, weshalb die Betätigung solcher Flügelmuttern bei der Aufbringung der Klemmkräfte für die Benutzer unangenehm ist. Werden Klemmelemente ohne Handgreifflächen eingesetzt, beispielsweise Sechskantmuttern, ist zur Betätigung der Klemmelemente zusätzlich Werkzeug notwendig.

Aus der EP 0 415 899 A1 ist eine Befestigungseinrichtung zur Befestigung eines Reserverades gemäß dem Oberbegriff des Anspruchs 1 bekannt, die einen Gewindeschaft (screw part), einen Sockel (attachment part) und eine Stellmutter (nut part) aufweist, wobei der Gewindeschaft und die Stellmutter vorzugsweise aus Kunststoff hergestellt werden. Der Gewindeschaft kann mit Hilfe einer Drehverriegelung mit dem Sockel verbunden werden. Um ein Überdrehen des Gewindeschafts zu verhindern, sind an dem Sockel zwei Stoppelemente vorgesehen.

Bei dieser Ausführung kann durch die im Auto auftretenden Vibrationen das Schraubenteil eine Drehung in der der Schließrichtung entgegengesetzten Richtung ausführen und somit kann ein ungewolltes Öffnen der Befestigungsvorrichtung stattfinden.

Aufgabe der vorliegenden Erfindung ist es deshalb, eine Befestigungsvorrichtung zur Befestigung eines Reserverads zu schaffen, die leichtgängig von Hand geöffnet werden kann, durch Korrosion nicht verändert wird.

Diese Aufgabe wird durch eine Befestigungseinrichtung mit den Merkmalen des Anspruchs 1 gelöst, und eine zuverlässige Befestigung des Reserrerade gewährleistet.

Vorteilhafte Ausführungsformen der Erfindung sind Gegenstand der Unteransprüche.

Bei der erfindungsgemäßen Befestigungsvorrichtung ist das Klemmelement als von Hand betätigbare Stellmutter ausgestaltet, die Funktionsflächen zur Verklemmung des Rades aufweist. Außerdem sind zumindest Gewindeschaft und Stellmutter jeweils einstückig aus Kunststoff hergestellt. Dabei ist es selbstverständlich auch möglich, daß auch der Sockel einstückig an den Gewindeschaft angeformt ist. Der Sockel kann aber auch als separates Bauteil gefertigt werden und lösbar oder unlösbar mit dem Gewindeschaft verbunden sein. Da Gewindeschaft und Stellmutter aus Kunststoff hergestellt sind, ist eine Korrosion des Gewindegangs ausgeschlossen und die Leichtgängigkeit der Befestigungsvorrichtung bleibt auch unter länger anhaltendem korrosiven Einfluß, wie er in Reserveradmulden oder insbesondere bei Reserveradaufnahmen außerhalb der Karosserie infolge von Feuchtigkeit häufig gegeben ist, unbegrenzt erhalten. Da Kunststoff ein geringeres spezifisches Gewicht als metallische Werkstoffe insbesondere Stahl aufweist, kann der Gewindeschaft bei geringem Gesamtgewicht mit einem größeren Durchmesser ausgestaltet sein. Da somit der Gewindegang einen größeren wirksamen Durchmesser aufweist, sind zur Erreichung der gleichen Klemmkräfte geringere Flächenpressungen im Gewindegang erforderlich, weshalb die erfindungsgemäße Befestigungsvorrichtung weniger zum Verklemmen neigt. Wegen des vergleichsweise großen Gewindedurchmessers, weist auch die Stellmutter einen großen Außendurchmesser auf. Wegen des großen Außendurchmessers werden vom Benutzer aufgebrachte Kräfte mit einem großen Hebelarm übertragen. Zur Erzielung gleicher Gewindeanzugsmomente sind dann kleinere Stellkräfte notwendig, so daß diese leichter von Hand aufgebracht werden können. Das Unterlegen einer Beilagscheibe kann entfallen, da der Durchmesser der Kunststoffstellmutter ausreicht, um unmittelbar an der Felge zur Anlage zu kommen.

Grundsätzlich ist es ausreichend, wenn der Gewindeschaft mit dem unteren Ende die Bauteilwandung des Sockels im verriegelten Zustand hintergreift, da damit Zugkräfte von dem Gewindeschaft auf den Sockel übertragen werden können und somit die Reserveradfelge durch Zustellen der Klemmutter in der Reserveradmulde befestigbar ist. Da jedoch infolge der im Fahrzeug vorhandenen Vibrationen ein ungewolltes Verdrehen des Gewindeschafts im normalen Fahrbetrieb nicht ausgeschlossen werden kann, wodurch der Gewindeschaft sich aus der Verankerung lösen würde, weisen Sockel und Gewindeschaft eine miteinander korrespondierende Rastkontur auf. Diese Rastkontur ist so anzuordnen, daß der Gewindeschaft im verriegelten Zustand in den Sockel einrastbar ist. Steht der Gewindeschaft dann unter Zug, verhindert die Rastkontur ein ungewolltes Verdrehen des Gewindeschafts und die damit verbundene ungewollte Lösung des Reserverades. Steht der Gewindeschaft durch Lösen der Klemmutter nicht mehr unter Zug, kann der Gewindeschaft aus der Rastkontur gelöst werden und danach Sockel und Gewindeschaft voneinander getrennt werden.

Grundsätzlich ist es möglich, den Sockel einstückig mit dem Gewindeschaft zu fertigen oder den Sockel unlösbar mit dem Gewindeschaft zu verbinden. In diesen Fällen bildet Sockel und Gewindeschaft ein einheitliches Bauteil und die Stellmutter muß dann vor der Entnahme des Reserverades zwingend am oberen Ende des Gewindeschafts abgeschraubt werden. Vorzugswürdig ist es jedoch, wenn Sockel und Gewindeschaft zweiteilig, lösbar miteinander verbindbar sind. Soll das Reserverad entnommen werden, so wird zunächst die Stellmutter gelöst, so daß die Befestigungsvorrichtung im wesentlichen keine Klemmkraft auf das Reserverad aufbringt. Ist der Gewindeschaft mit dem Sockel lösbar verbunden, so ist ein Entfernen der Stellmutter vor der Entnahme des Reserverades nicht notwendig. Vielmehr kann nach der Lösung der Haltespannung die Verbindung zwischen Gewindeschaft und Sockel gelöst werden und die Gewindeschaft danach nach oben herausgezogen werden. Da ein Entfernen der Klemmutter von dem Gewindeschaft nicht notwendig ist, ergibt sich für den Bediener ein Zeitvorteil, wenn die lösbare Verbindung zwischen Sockel und Gewindeschaft mit einer einfachen Stellbewegung gelöst werden kann. Die Verbindung zwischen Sockel und Gewindeschaft kann beispielsweise als Gewinde mit kurzem Gewindegang oder als Drehriegelverbindung ausgeführt sein. Da die Entfernung der Stellmutter über das obere Ende des Gewindeschafts entfällt, muß das Gewinde nicht bis zum oberen Ende des Gewindeschafts durchgehen und das obere Ende des Gewindeschafts kann deshalb auch einen größeren Durchmesser aufweisen als der Gewindegang. Dies erlaubt es , weitere Funktionen, beispielsweise einen Griff, in den oberen Bereich des Gewindeschafts zu integrieren.

Vorzugswürdig sollte die Verbindung zwischen Gewindeschaft und Sockel ein Winkelspiel dem Gewindeschaft relativ zum Sockel ermöglichen. Wird das Reserverad nicht exakt mittig über der Befestigungsvorrichtung plaziert, so muß der Gewindeschaft zumindest leicht geneigt werden, um das Reserverad zu durchgreifen. Sind Gewindeschaft und Sockel starr miteinander verbunden, so entsteht infolge der Neigung des Gewindeschafts ein großes Drehmoment im Verbindungsbereich zwischen Sockel und Gewindeschaft. Dieses Drehmoment kann bei Überschreitung der zulässigen Werkstoffkennwerte eine Beschädigung der Bauteile bewirken. Erlaubt die Verbindung zwischen Gewindeschaft und Sockel ein gewisses Winkelspiel, so treten bei der Neigung des Gewindeschafts keine resultierenden Drehmomente auf und eine Beschädigung der Befestigungsvorrichtung ist ausgeschlossen.

Um die Verbindung zwischen Sockel und Gewindeschaft besonders einfach und schnell lösen zu können, sollte sie als Drehverriegelung ausgeführt sein. Im Ergebnis funktioniert diese Verbindung nach dem Schlüssel-Schloß-Prinzip. Der Gewindeschaft wird mit ihrem unteren Ende, das zumindest ein Riegelelement enthält, beispielsweise einen oder mehrere Haltearme, in eine korrespondierende Ausnehmung im Riegelboden des Sockels eingesteckt und danach durch Verdrehen des Gewindeschafts relativ zur Ausnehmung im Riegelboden verriegelt.

Durch die Drehung des Gewindeschafts hintergreift das untere Ende des Gewindeschafts mit dem Riegelelement die Bauteilwandung des Sockels. Nach der Verriegelung kann der Gewindeschaft nicht mehr nach oben weggezogen werden. Ist diese Drehriegelverbindung nicht paßgenau gefertigt, sondern weist ein gewisses Lagerspiel auf, so wird eine Neigung des Gewindeschafts gegenüber dem Sockel ermöglicht, womit eine exakte Positionierung der Reserveradfelge über der Befestigungsvorrichtung nicht mehr erforderlich ist.

In sehr vielen Kraftfahrzeugen ist die Reserveradmulde im Boden des Kofferraums angeordnet. Die Reserveradmulde wird dann durch einen Ladeboden, der oberhalb des Reserverades in den Kofferraumboden eingelassen ist, abgedeckt. Dieser Ladeboden muß eine ausreichende Formstabilität aufweisen, so daß Gepäckstücke, die in den Kofferraum eingeladen werden, nicht in die Reserveradmulde durchhängen oder im Extremfall sogar den Ladeboden zerbrechen. Ist der Ladeboden über der gesamten Reserveradmulde frei schwebend angeordnet, sind relativ dicke Bauteilwandungen notwendig, um eine ausreichende Formstabilität zu erreichen. Eine Verringerung der erforderlichen Bauteilwandungen und eine Verringerung des damit verbundenen Gewichts des Ladebodens kann durch eine mittig am Ladeboden anliegenden Auflager erreicht werden. Es ist deshalb vorzugswürdig, wenn die Befestigungsvorrichtung gerade so lang ist, daß der Ladeboden des darüberliegenden Kofferraums mit der Unterseite am oberen Ende der Befestigungsvorrichtung zur Anlage bringbar ist. Im Ergebnis bildet das obere Ende der Befestigungsvorrichtung ein Auflager zur Abstützung des Ladebodens. Beispielsweise kann dies Maßnahme dadurch erreicht werden, wenn die Länge des Gewindeschafts gemessen vom Boden der Reserveradmulde gerade der Gesamthöhe der Reserveradmulde entspricht.

Da die Höhe der Reserveradmulde bei verschiedenen Fahrzeugtypen im Regelfall variiert, kann eine Befestigungsvorrichtung mit einheitlicher Länge nicht für alle Fahrzeugtypen zur Abstützung des Ladebodens dienen. Um nicht für jeden Fahrzeugtyp eine spezifische Befestigungsvorrichtung für das Reserverad vorsehen zu müssen, sollte am oberen Ende des Gewindeschafts ein Verlängerungsstück befestigbar sein. Die Befestigung des Reserverades erfolgt dann mit einer einheitlichen Befestigungsvorrichtung und die unterschiedlichen Höhen der Reserveradmulden werden durch typenbezogene Verlängerungsstücke ausgeglichen. Es gibt dabei eine Vielzahl von Möglichkeiten das Verlängerungsstück auf dem Gewindeschaft zu befestigen. Beispielsweise könnte dieses festgeschraubt oder festgeklebt sein. Die Montage des Verlängerungsstücks ist jedoch besonders einfach, wenn das Verlängerungsstück auf den Gewindeschaft aufgesteckt oder in den Gewindeschaft eingesteckt werden kann. Nach der Montage und Befestigung des Reserverades mit der einheitlichen Befestigungsvorrichtung muß anschließend lediglich das typenbezogene Verlängerungsstück am oberen Ende des Gewindeschafts auf- oder eingesteckt werden. Einstellarbeiten zur Justierung der Länge der Befestigungsvorrichtung entfallen dann. Wird die Verlängerung aufgeschraubt, kann auch das Verlängerungsstück typenunabhängig hergestellt werden und der notwendige Maßausgleich durch Einstellung des Gewindes erreicht werden.

Um ein Mitdrehen des Gewindeschafts beim Festziehen oder Lösen der Klemmutter zu verhindern, sollte das obere Ende des Gewindeschafts eine Handgriffkontur aufweisen. An dieser Handgriffkontur kann der Gewindeschaft vom Bediener festgehalten werden und damit ein unerwünschtes Verdrehen des Gewindeschafts beim Anziehen der Stellmutter verhindert werden. Als besonders ergonomisch und griffgünstig haben sich dabei Sterngriffkonturen erwiesen, deren Durchmesser in etwa der Größe einer Handfläche entsprechen. Diese Sterngriffkontur wird in den Außenumfang im oberen Bereich des Gewindeschafts eingearbeitet. Dies ist besonders dann vorteilhaft, wenn der Gewindeschaft im wesentlichen als Hohlwelle ausgestaltet ist. Außerdem erlaubt ein Sterngriff das Einstecken eines Verlängerungsstücks in den Innenumfang eines als Hohlwelle ausgestalteten Gewindeschafts, da für den Griff lediglich der Außenumfang des Gewindeschafts genutzt wird.

Zur weiteren Gewichtsreduzierung der erfindungsgemäßen Befestigungsvorrichtung sollte der Gewindeschaft im wesentlichen als Hohlwelle ausgebildet sein Eine optimale Nutzung der Werkstoffeigenschaften von Kunststoff wird erreicht, wenn der Gewindeschaft einen Gewindegang mit einem Durchmesser im Bereich von 20 bis 100 mm aufweist.

Da an der Stellmutter beträchtliche Anzugsmomente zur Klemmung des Reserverades von Hand aufgebracht werden müssen, sollte die Stellmutter vorzugsweise als Sterngriffmutter ausgeführt sein. Sterngriffmuttern dieser Art sind an sich bekannt und weisen am Außendurchmesser eine sternförmige Griffkontur auf, die ergonomisch ausgeformt ist.

Wird die Sterngriffmutter auf dem Gewindeschaft zugestellt, kommt sie von oben auf der Reserveradfelge zur Anlage, wodurch mittels Reibschluß radial wirkende Haltekräfte auf die Felge übertragen werden. Deutlich verbessert wird die radiale Kraftübertragung von der Sterngriffmutter auf die Felge, wenn an der Sterngriffmutter ein Flansch angeformt ist, dessen Durchmesser zumindest etwas kleiner als der Durchmesser der Radnabenausnehmung in der Felge ist. Mit diesem Flansch kann die Sterngriffmutter die Radnabenausnehmung durchgreifen, wodurch in radialer Richtung eine formschlüssige Verbindung zwischen Sterngriffmutter und Felge entsteht. Der Flansch muß dabei nicht zwingend durch eine durchgehende Kreiszylinderfläche gebildet werden, sondern kann auch durch stegartige Einzelelemente, die die Radnabenausnehmung am Innendurchmesser zumindest bereichsweise berühren, gebildet werden. Daneben sollte die Sterngriffmutter eine ebene und durchgehende Radialfläche aufweisen, an der die Reserveradfelge zur Anlage bringbar ist, so daß die Klemmkräfte über eine möglichst große Auflagefläche übertragen werden.

Das Gewinde in der Sterngriffmutter oder ganz allgemein in dem verwendeten Klemmelement sollte ein- oder zweigängig ausgeführt sein. Das Gewinde sollte dabei eine Steigung im Bereich der Selbsthemmung aufweisen, so daß das angezogene Klemmelement sich infolge der Vibrationen nicht ungewollt löst und die aufgebrachte Klemmkraft dauerhaft erhalten wird.

Grundsätzlich gibt es viele Möglichkeiten, den Sockel an der Karosserie zu befestigen. Beispielsweise kann dies durch Verkleben oder Einklipsen erfolgen. Besonders einfach läßt sich der Sockel montieren, wenn er an der Karosserie angeschraubt werden kann. Der Sockel kann dazu im Bereich der Aufnahmegewinde verstärkte Wandungsbereiche aufweisen. Um einen exakten Sitz des Sockels zu gewährleisten, sollte der Sockel einen Zentrierbund aufweisen, der in eine korrespondierende Ausnehmung in der Karosserie einsteckbar ist.

Zur Herstellung des Gewindeschafts und/oder des Sterngriffs eignet sich besonders gut Polyoxymethylen, da es günstige mechanische Eigenschaften besitzt, kostengünstig verarbeitet werden kann und günstige Haftreibungseigenschaften aufweist, die den Einsatz dieses Werkstoffs zur Herstellung von Gewinden begünstigen. Der Sockel der Befestigungsvorrichtung sollte vorzugswürdig aus Polyamid hergestellt sein.

Nachfolgend wird die Erfindung anhand lediglich eine bevorzugte Ausführungsform der erfindungsgemäßen Befestigungsvorrichtung darstellender Zeichnungen näher erläutert.

Es zeigt
- **Fig. 1**: eine Befestigungsvorrichtung in seitlich geschnittener Darstellung;
- **Fig. 2**: die Befestigungsvorrichtung aus **Fig. 1** in Ansicht von oben;
- **Fig. 3**: die Befestigungsvorrichtung aus **Fig. 1** in Ansicht von unten.

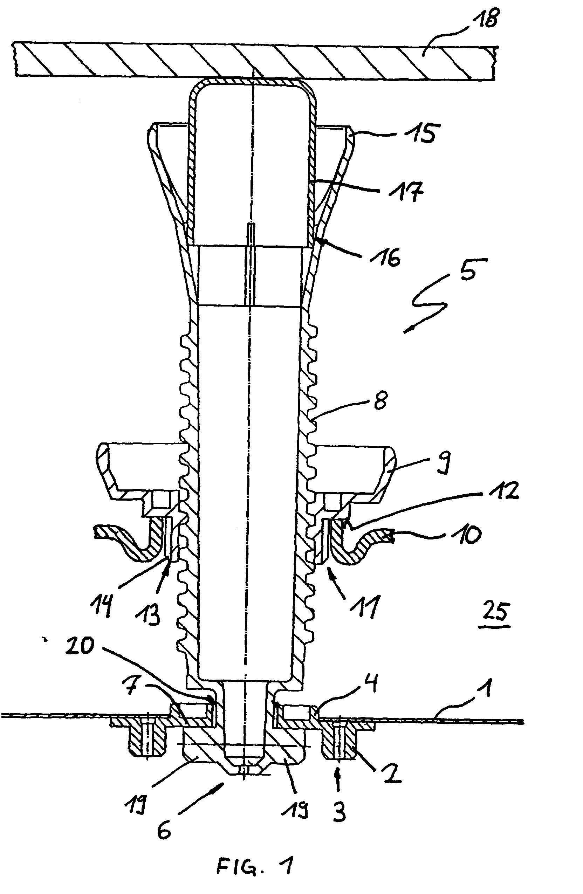

**Fig. 1** zeigt eine Befestigungsvorrichtung in seitlich geschnittener Darstellung mit einem Gewindeschaft 5 und einem Sockel 2. An einem gebrochen dargestellten Karosserieblech 1 kann der Sockel 2 durch Einschrauben von Befestigungsschrauben in Schraubaufnahmen 3 befestigt werden. Der Sockel 2 wird dabei von unten gegen das Blech verschraubt und ein Zentrierbund 4 durchgreift das Karosserieblech 1 in einer korrespondierenden Ausnehmung.

Der Gewindeschaft 5 weist im wesentlichen drei Bereiche auf, einen unteren Bereich, einen mittleren Bereich und einem oberen Bereich. Der untere Bereich des Gewindeschafts 5 ist als Drehriegelelement 6 mit zwei einander gegenüberliegenden Haltearmen 19 ausgestaltet. Diese Haltearme 19 können eine korrespondierende Ausnehmung 20 in einen Riegelboden 7 des Sockels 2 in einer Eingriffsstellung durchgreifen und dann durch Verdrehen des Gewindeschafts 5 den Riegelboden 7 hintergreifen. Durch dieses Hintergreifen können Kräfte aus dem Gewindeschaft 5 über das Riegelelement 6 in den Sockel 2 abgeleitet werden.

Der mittlere Bereich des Gewindeschafts 5 ist als Gewindeteil 8 ausgeformt. Auf dem Gewindeteil 8 kann eine hier als Sterngriffmutter 9 ausgestaltete Stellmutter durch Verdrehen zugestellt werden. Der Gewindeschaft 5 durchgreift eine im Teilschnittdarstellung gezeigten Reserveradfelge 10 in einer für die Radnabe vorgesehenen Ausnehmung 11. Wird die Sterngriffmutter 9 nach unten zugestellt, so kommt eine ebene Radialfläche 12 an der Reserveradfelge 10 zur Anlage und drückt die Reserveradfelge 10 gegen das Karosserieblech 1, das in diesem Bereich den Boden einer Reserveradmulde 25 bildet. Durch weiteres Zustellen der Sterngriffmutter kann eine Fixierung der Reserveradfelge in der Reserveradmulde 25 erreicht werden.

Der Flansch 13 durchgreift die für die Radnabe vorgesehene Ausnehmung 11 und sorgt für einen formschlüssigen Sitz der Befestigungsvorrichtung an dem Reserverad. Dabei kommt nicht die komplette Umfangsfläche des Flanschs 13 an der Reserveradfelge zur Anlage, sondern nur die hervorstehenden Stege 14 liegen an der Reserveradfelge bereichsweise an. Dadurch wird eine Verminderung der Reibungskräfte beim Einschrauben der Sterngriffmutter in die Reserveradfelge erreicht. Zur besseren Einführung der Sterngriffmutter 9 in die Ausnehmung 11 sind die Stege 14 mit Einführschrägen versehen.

Um den Gewindeschaft 5 sicher handhaben zu können, ist der obere Bereich des Gewindeschafts 5 als Handgriff 15 ausgeformt. Dieser Handgriff weist einen größeren Durchmesser als das Gewinde 8 auf, da dies eine bequemere Handhabung durch den Benutzer erlaubt und zur Entnahme des Reserverades ein Abschrauben der Sterngriffmutter 9 nicht erforderlich ist. Vielmehr muß dazu lediglich der Gewindeschaft 5 nach Lösen der Klemmkraft zur Öffnung des Drehriegels 6 verdreht werden und aus dem Sockel 2 und durch die Reserveradfelge 10 nach oben abgezogen werden. Der Handgriff 15 ermöglicht es, beim Anziehen der Sterngriffmutter 9 ein unerwünschtes Verdrehen des Gewindeschafts 5 zu verhindern.

Der als Hohlwelle ausgestaltete Gewindeschaft 5 enthält im oberen Bereich die zylindrische Aufnahme 16, in die das Verlängerungsstück 17 eingesteckt werden kann. Durch Einsatz von Verlängerungsstücken mit unterschiedlichen Längen läßt sich die Länge der Befestigungsvorrichtung beinahe beliebig verändern. Das Verlängerungsstück 17 ist gerade so lang, daß es an der Unterseite des über dem Reserverad angeordneten Ladebodens 18 zur Anlage kommt. Damit wird der Ladeboden 18 von der Befestigungsvorrichtung nach unten hin abgestützt und kann dementsprechend mechanisch höher belastet werden

Der Gewindeschaft 5 liegt im verriegelten Zustand nicht spielfrei an dem Sockel 2 an, sondern weist ein radiales Spiel auf. Dieses radiale Spiel ermöglicht im Zusammenhang mit einer Abrollbewegung der Haltearme 19 auf dem Riegelboden 7 ein Winkelspiel des Gewindeschafts relativ zum Sockel, so daß im wesentlichen keine Spannungen in den Bauteilen entstehen, wenn der Gewindeschaft gegenüber dem Sockel geneigt wird.

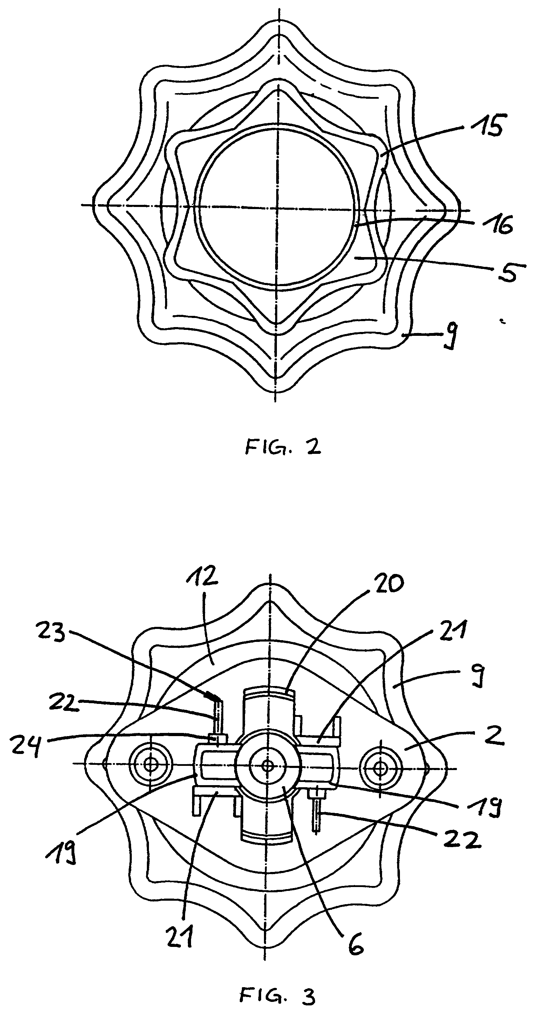

**Fig. 2** zeigt die Befestigungsvorrichtung aus **Fig. 1** in einer Ansicht von oben. Man erkennt die Sterngriffmutter 9, das als Sterngriff 15 ausgeformte obere Ende des Gewindeschafts 5 und die Aufnahme 16.

**Fig. 3** zeigt die erfindungsgemäße Befestigungsvorrichtung aus **Fig. 1** in Ansicht von unten. Man erkennt die Sterngriffmutter 9 mit der ebenen Radialfläche 12, die an der Reserveradfelge zur Anlage kommt, das als Drehriegelelement 6 ausgestaltete untere Ende des Gewindeschafts 5 mit den beiden Haltearmen 19, die den Sockel 2 in der korrespondierenden Ausnehmung 20 durchgreifen können. Die Ausnehmung 20 kann vom Drehriegelelement 6 in zwei um etwa 180 ° zueinander versetzten Eingriffsstellung durchgriffen werden, da die Ausnehmung 20 formkomplementär zu dem nicht rotationssymmetrischen Riegelelement 6 ausgestaltet ist. Wird der Gewindeschaft 5 verdreht, nachdem das Riegelelement 6 den Sockel 2 in der Ausnehmung 20 durchgriffen hat, so hintergreifen die Haltearme 19 den Riegelboden 7 des Sockels 2 und stellen dadurch die Verbindung zwischen Gewindeschaft 5 und Sockel 2 her.

Im Sockel 2 sind die auf dem Riegelboden 7 hervorstehenden Endanschläge 21 vorgesehen, an denen die Haltearme 19 nach einer 90°-Drehung des Gewindeschafts zur Anlage kommen. Dadurch wird ein Weiterdrehen des Gewindeschafts ausgeschlossen und ein definierter Riegelanschlag geschaffen. Daneben enthält der Sockel 2 die rampenartig aus der Bauteilebene hervorstehenden Rastelemente 22. Das erste Ende 23 der Rastelemente 22 geht in die Bauteilebene des Sockels 2 über und erlaubt ein ruckfreies Aufgleiten der Haltearme 19 auf die Rastelemente 22 beim Verdrehen des Gewindeschafts. Das zweite Ende 24 der Rastelemente 22 steht von der Bauteilwandung des Sockels 2 an dem die Haltearme 19 zur Anlage kommen, ab. Liegen die Haltearme 19 an den Endanschläge 21 vertikal an, so rasten die Haltearme 19 zwischen den Endanschläge 21 und dem zweite Ende 24 der Rastelemente 22 ein. Wird der Gewindeschaft durch Zustellen der Sterngriffmutter 9 unter Zug gesetzt, werden die Haltearme 19 in den horizontalen Kontaktflächen gegen den Sockel 2 gezogen und der Gewindeschaft 5 weist keinerlei vertikale Beweglichkeit mehr auf. Ein ungewolltes Verdrehen des Gewindeschafts infolge von Vibrationen ist dann sicher ausgeschlossen, da die Haltearme 19 zwischen den Endanschlägen 21 und den Rastelementen 22 eingerastet sind. Die Endanschläge 21 und die Rastelemente 22 bilden im Ergebnis eine Rastkontur für die Haltearme 15.

Erst nachdem die Sterngriffmutter wieder gelöst wird und der Gewindeschaft 5 wiederum vertikal bewegt werden kann, können die Haltearme 19 aus der Rastkontur gelöst werden und damit der Gewindeschaft 5 durch Verdrehen entriegelt werden.

## Patentansprüche

1. Befestigungsvorrichtung zur Befestigung eines Reserverads an einer Reserveradaufnahme mit einem Gewindeschaft (5) und einem Sockel (2) zur Anordnung an einem Ende des Gewindeschafts (5) und zur Befestigung des Gewindeschafts (5) an der Reserveradaufnahme, wobei auf dem Gewindeschaft (5) ein einstellbares Klemmelement (9) zur Verklemmung des Reserverades angeordnet ist, wobei das Klemmelement als von Hand betätigbare Stellmutter (9) ausgestaltet ist und zumindest Gewindeschaft (5) und Stellmutter (9) jeweils einstückig aus Kunststoff hergestellt sind,
**dadurch gekennzeichnet,**
**dass** Sockel (2) und Gewindeschaft (5) eine miteinander korrespondierende Rastkontur (21, 22) aufweisen, so dass der Gewindeschaft (5) im verriegelten Zustand in dem Sockel (2) einrastbar ist.

2. Befestigungsvorrichtung nach Anspruch 1,
**dadurch gekennzeichnet,**
**dass** Sockel (2) und Gewindeschaft (5) zweiteilig, lösbar miteinander verbindbar sind.

3. Befestigungsvorrichtung nach Anspruch 1 oder 2,
**dadurch gekennzeichnet,**
**dass** die Verbindung zwischen Gewindeschaft (5) und Sockel (2) ein Winkelspiel des Gewindeschafts (5) relativ zum Sockel (2) ermöglicht.

4. Befestigungsvorrichtung nach einem der Ansprüche 1 bis 3,
**dadurch gekennzeichnet,**
**dass** die Verbindung zwischen Sockel (2) und Gewindeschaft (5) als Drehverriegelung (7, 19) ausgeführt ist, so dass Sockel (2) und Gewindeschaft (5) durch eine Drehbewegung miteinander verbindbar sind.

5. Befestigungsvorrichtung nach einem der Ansprüche 1 bis 4,
**dadurch gekennzeichnet,**
**dass** die Befestigungsvorrichtung gerade so lang ist, dass der Ladeboden (18) des darüberliegenden Kofferraums mit der Unterseite am oberen Ende der Befestigungsvorrichtung zur Anlage bringbar ist.

6. Befestigungsvorrichtung nach einem der Ansprüche 1 bis 5,
**dadurch gekennzeichnet,**
**dass** an einem Ende des Gewindeschafts (5) ein Verlängerungsstück (17) befestigbar ist.

7. Befestigungsvorrichtung nach Anspruch 6,
**dadurch gekennzeichnet,**
**dass** das Verlängerungsstück (17) auf oder in den Gewindeschaft (5) auf- oder einsteckbar ist.

8. Befestigungsvorrichtung nach Anspruch 6,
**dadurch gekennzeichnet,**
**dass** das Verlängerungsstück (17) auf oder in den Gewindeschaft (5) auf- oder einschraubbar ist.

9. Befestigungsvorrichtung nach einem der Ansprüche 1 bis 8,
**dadurch gekennzeichnet,**
**dass** das eine Ende des Gewindeschafts (5) eine Handgriffkontur (15) aufweist, die insbesondere in der Art eines Sterngriffs ausgestaltet ist.

10. Befestigungsvorrichtung nach einem der Ansprüche 1 bis 9,
**dadurch gekennzeichnet,**
**dass** der Gewindeschaft (5) im Wesentlichen als Hohlwelle ausgebildet ist.

11. Befestigungsvorrichtung nach einem der Ansprüche 1 bis 10,
**dadurch gekennzeichnet,**
**dass** der Gewindeschaft (5) einen Gewindegang (8) mit einem Durchmesser im Bereich von 20 bis 100 mm aufweist.

12. Befestigungsvorrichtung nach einem der Ansprüche 1 bis 11,
**dadurch gekennzeichnet,**
**dass** die Stellmutter als Sterngriffmutter (9) ausgestaltet ist.

13. Befestigungsvorrichtung nach Anspruch 12,
**dadurch gekennzeichnet,**
**dass** an der Sterngriffmutter (9) ein Flansch (13) angeformt ist, dessen Durchmesser zumindest etwas kleiner als der Durchmesser der Radnabenausnehmung (11) in der Reserveradfelge (10) ist.

14. Befestigungsvorrichtung nach Anspruch 12 oder 13,
**dadurch gekennzeichnet,**
**dass** die Sterngriffmutter (9) eine ebene Radialfläche (12) aufweist, die an der Reserveradfelge (10) zur Anlage bringbar ist.

15. Befestigungsvorrichtung nach einem der Ansprüche 1 bis 14,
**dadurch gekennzeichnet,**
**dass** das Klemmelement (9) ein 1-gängiges oder 2-gängiges Gewinde enthält.

16. Befestigungsvorrichtung nach einem der Ansprüche 1 bis 15,
**dadurch gekennzeichnet,**
**dass** der Gewindegang in dem Klemmelement (9) eine selbsthemmende Steigung aufweist.

17. Befestigungsvorrichtung nach einem der Ansprüche 1 bis 16,
**dadurch gekennzeichnet,**
**dass** der Sockel (2) an der Karosserie (1) anschraubbar ist.

18. Befestigungsvorrichtung nach einem der Ansprüche 1 bis 17,
**dadurch gekennzeichnet,**
**dass** der Sockel (2) einen Zentrierbund (4) aufweist, der in eine korrespondierende Ausnehmung in der Karosserie einsteckbar ist.

19. Befestigungsvorrichtung nach einem der Ansprüche 1 bis 18,
**dadurch gekennzeichnet,**
**dass** Gewindeschaft (5) und/oder das Klemmelement (9) aus Polyoxymethylen hergestellt sind.

20. Befestigungsvorrichtung nach einem der Ansprüche 1 bis 19,
**dadurch gekennzeichnet,**
**dass** der Sockel (2) aus Polyamid hergestellt ist.

## Claims

1. An attachment device for attaching a reserve wheel to a reserve wheel receiver having a threaded shaft (5) and a base (2) for positioning on one end of the threaded shaft (5) and for attaching the threaded shaft (5) to the reserve wheel receiver, an adjustable clamping element (9) being positioned on the threaded shaft (5) for clamping the reserve wheel, the clamping element being implemented as an adjustment nut (9) which is operable by hand and at least the threaded shaft (5) and the adjustment nut (9) each being implemented in one piece from plastic,
**characterized in that** the base (2) and the threaded shaft (5) have snap contours (21, 22) which correspond to one another, so that the threaded shaft (5) may be snapped into the base (2) in the locked state.

2. The attachment device according to Claim 1,
**characterized in that** the base (2) and threaded shaft (5) are in two parts and are detachably connectable to one another.

3. The attachment device according to Claim 1 or 2,
**characterized in that** the connection between the threaded shaft (5) and the base (2) allows angular play of the threaded shaft (5) in relation to the base (2).

4. The attachment device according to one of Claims 1 to 3,
**characterized in that** the connection between the base (2) and the threaded shaft (5) is implemented as a rotary locking device (7, 19), so that the base (2) and threaded shaft (5) are connectable to one another through a rotational movement.

5. The attachment device according to one of Claims 1 to 4,
**characterized in that** the attachment device is just long enough that the bottom of the loading floor (18) of the trunk above may be brought to rest on the upper end of the attachment device.

6. The attachment device according to one of Claims 1 to 5,
**characterized in that** an extension piece (17) is attachable to one end of the threaded shaft (5).

7. The attachment device according to Claim 6,
**characterized in that** the extension piece (17) may be plugged onto or into the threaded shaft (5).

8. The attachment device according to Claim 6,
**characterized in that** the extension piece (17) may be screwed onto or into the threaded shaft (5).

9. The attachment device according to one of Claims 1 to 8,
**characterized in that** one end of the threaded shaft (5) has a handle contour (15), which is particularly designed like a star grip.

10. The attachment device according to one of Claims 1 to 9,
**characterized in that** the threaded shaft (5) is essentially implemented as a hollow shaft.

11. The attachment device according to one of Claims 1 to 10,
**characterized in that** the threaded shaft (5) has a thread (8) having a diameter in the range from 20 to 100 mm.

12. The attachment device according to one of Claims 1 to 11,
**characterized in that** the adjustment nut is implemented as a star grip nut (9).

13. The attachment device according to Claim 12,
**characterized in that** a flange (13), whose diameter is at least somewhat smaller than the diameter of the wheel hub recess (11) in the reserve wheel rim (10), is moulded onto the star grip nut (9).

14. The attachment device according to Claims 12 or 13,
**characterized in that** the star grip nut (9) has a flat radial surface (12), which may be brought to rest on the reserve wheel rim (10).

15. The attachment device according to one of Claims 1 to 14,
**characterized in that** the clamping element (9) has a single thread or double thread.

16. The attachment device according to one of Claims 1 to 15,
**characterized in that** the thread in the clamping element (9) has a self-locking pitch.

17. The attachment device according to one of Claims 1 to 16,
**characterized in that** the base (2) may be screwed onto the vehicle body (1).

18. The attachment device according to one of Claims 1 to 17,
**characterized in that** the base (2) has a centring collar (4) which may be inserted into a corresponding recess in the vehicle body.

19. The attachment device according to one of Claims 1 to 18,
**characterized in that** the threaded shaft (5) and/or the clamping element (9) are produced from polyoxymethylene.

20. The attachment device according to one of Claims 1 to 19,
**characterized in that** the base (2) is produced from polyamide.

## Revendications

1. Dispositif de fixation pour fixer une roue de secours sur un support de roue de secours, comprenant une tige filetée (5) et un socle (2) pour être placé à une extrémité de la tige filetée (5) et pour la fixation de la tige filetée (5) sur le support de la roue de secours, un élément de serrage (9) réglable pour le serrage de la roue de secours étant disposé sur la tige filetée (5) et façonné sous forme d'écrou de serrage à main (9), au moins la tige filetée (5) et l'écrou de serrage (9) étant fabriqués chacun en matière synthétique en une pièce, **caractérisé en ce que** le socle (2) et la tige filetée (5) comportent chacun un profil d'encliquetage (21, 22) correspondant l'un à l'autre de sorte que la tige filetée (5) est encliquetable dans le socle (2) à l'état verrouillé.

2. Dispositif de fixation selon la revendication 1, **caractérisé en ce que** le socle (2) et la tige filetée (5) sont en deux pièces pouvant être raccordées de façon amovible.

3. Dispositif de fixation selon la revendication 1 ou 2, **caractérisé en ce que** la liaison entre la tige filetée (5) et le socle (2) permet un jeu angulaire de la tige filetée (5) par rapport au socle (2).

4. Dispositif de fixation selon l'une quelconque des revendications 1 à 3, **caractérisé en ce que** la liaison entre la tige filetée (5) et le socle (2) est réalisée sous forme de verrouillage rotatif (7, 19) de sorte que le socle (2) et la tige filetée (5) peuvent être reliés l'un à l'autre par un mouvement rotatif.

5. Dispositif de fixation selon l'une quelconque des revendications 1 à 4, **caractérisé en ce que** le dispositif de fixation a juste la longueur pour que la surface inférieure du fond de chargement (18) du coffre situé au-dessus puisse mis en appui sur l'extrémité supérieure du dispositif de fixation.

6. Dispositif de fixation selon l'une quelconque des revendications 1 à 5, **caractérisé en ce qu'**une pièce de rallonge (17) peut être fixée sur une extrémité de la tige filetée (5).

7. Dispositif de fixation selon la revendication 6, **caractérisé en ce que** la pièce de rallonge (17) peut être enfichée sur ou dans la tige filetée (5).

8. Dispositif de fixation selon la revendication 6, **caractérisé en ce que** la pièce de rallonge (17) peut être vissée au-dessus ou dans la tige filetée (5).

9. Dispositif de fixation selon l'une quelconque des revendications 1 à 8, **caractérisé en ce qu'**une extrémité de la tige filetée (5) comprend un profil de poignée (15), réalisé en particulier sous forme de poignée-étoile.

10. Dispositif de fixation selon l'une quelconque des revendications 1 à 9, **caractérisé en ce que** la tige filetée (5) est essentiellement sous forme d'arbre creux.

11. Dispositif de fixation selon l'une quelconque des revendications 1 à 10, **caractérisé en ce que** la tige filetée (5) comporte un filet de filetage (8) ayant un diamètre compris entre 20 et 100 mm.

12. Dispositif de fixation selon l'une quelconque des revendications 1 à 11, **caractérisé en ce que** l'écrou de serrage est sous forme d'écrou à tête en étoile (9).

13. Dispositif de fixation selon la revendication 12, **caractérisé en ce qu'**un collet (13) est formé sur l'écrou à tête en étoile (9), le diamètre du collet étant au moins légèrement plus petit que celui de l'évidement du moyeu de roue (11) dans la jante de la roue de secours (10).

14. Dispositif de fixation selon la revendication 12 ou 13, **caractérisé en ce que** l'écrou à tête en étoile (9) comporte une surface radiale plane (12) pouvant être mise en appui sur la jante de la roue de secours (10).

15. Dispositif de fixation selon l'une quelconque des revendications 1 à 14, **caractérisé en ce que** l'élément de serrage (9) comporte un filetage à filet simple ou à filet double.

16. Dispositif de fixation selon l'une quelconque des revendications 1 à 15, **caractérisé en ce que** le filet de filetage de l'élément de serrage (9) comporte un pas autobloquant.

17. Dispositif de fixation selon l'une quelconque des revendications 1 à 16, **caractérisé en ce que** le socle (2) peut être vissé sur la carrosserie (1).

18. Dispositif de fixation selon l'une quelconque des revendications 1 à 17, **caractérisé en ce que** le socle (2) comporte un rebord de centrage (4) pouvant être enfiché dans un évidement correspondant de la carrosserie.

19. Dispositif de fixation selon l'une quelconque des revendications 1 à 18, **caractérisé en ce que** la tige filetée (5) et/ou l'élément de serrage (9) sont fabriqués en polyoxyméthylène.

20. Dispositif de fixation selon l'une quelconque des revendications 1 à 19, **caractérisé en ce que** le socle (2) est fabriqué en polyamide.
